Europäisches Patentamt

(19) European Patent Office

Office européen des brevets

(11) Publication number: **0 052 476**
**B1**

(12) **EUROPEAN PATENT SPECIFICATION**

(45) Date of publication of patent specification: **31.10.84**

(21) Application number: **81305354.3**

(22) Date of filing: **11.11.81**

(51) Int. Cl.³: **F 16 L 13/10, F 16 L 47/02, F 16 B 4/00, B 29 C 27/02, H 02 G 15/00, H 01 B 17/00**

(54) **Covering method.**

(30) Priority: **18.11.80 JP 161388/80**

(43) Date of publication of application:
**26.05.82 Bulletin 82/21**

(45) Publication of the grant of the patent:
**31.10.84 Bulletin 84/44**

(84) Designated Contracting States:
**BE DE FR GB IT**

(56) References cited:
**AT-B- 263 349**
**DE-B-2 015 682**
**FR-A-2 412 919**
**FR-A-2 457 028**
**GB-A-2 019 112**
**US-A-4 085 286**
**US-A-4 176 274**
**US-A-4 234 020**

(73) Proprietor: **Ube Industries, Ltd.**
**12-32, Nishihonmachi 1-chome**
**Ube-shi, Yamaguchi-ken (JP)**

(72) Inventor: **Tsurutani, Iwao c/o Chiba-**
**Sekiyukagakukojo**
**UBE INDUSTRIES, LTD. 8-1, Goi Minamikaigan**
**Ichihara-shi Chiba-ken (JP)**
Inventor: **Kataoka, Hideto c/o Chiba-**
**Sekiyukagakukojo**
**UBE INDUSTRIES, LTD. 8-1, Goi Minamikaigan**
**Ichihara-shi Chiba-ken (JP)**
Inventor: **Taoka, Shinichi c/o Chiba-**
**sekiyukagakukojo**
**UBE INDUSTRIES, LTD. 8-1, Goi Minamikaigan**
**Ichihara-shi Chiba-ken (JP)**

(74) Representative: **George, Roger David et al**
**Raworth, Moss & Cook 36 Sydenham Road**
**Croydon Surrey CR0 2EF (GB)**

Courier Press, Leamington Spa, England.

## Description

Background of the invention
(1) Field of the invention

This invention relates to an improvement in the covering method for covering the periphery of a joint portion of a pipe, a cable or the like with a covering material comprising a heat-shrinkable sheet or tube having a heating conductor wire included therein and a heat-fusible adhesive layer on the inner surface of the heat-shrinkable sheet or tube.

(2) Description of the prior art

As the conventional covering material having a heating conductor were embedded therein, there can be mentioned materials disclosed in Japanese Laid-Open Patent Applications No. 34903/80 and No. 34904/80 and Japanese Laid-Open Utility Model Applications No. 63723/80, No. 63724/80, No. 79023/80 and No. 79024/80. It is also known that these covering materials have an adhesive layer as disclosed also by US—A—4085286.

Such covering material having a heating conductor wire embedded therein has been proposed as means for covering the periphery of a joint portion of a pipe (such as a steel pipe) or a cable relatively easily, even when external heating by a flame of a gas burner or the like is difficult to apply as in a cold district or a strong-wind district.

However, when the periphery of a joint portion of a steel pipe or cable is covered in a cold district with a covering material comprising a heat-shrinkable material having a conductor wire embedded therein and a heat-fusible adhesive layer bonded to the inner surface of the heat-shrinkable material, if only electricity is applied to the conductor wire, various disadvantages arise and no good results can be obtained. For example, it is sometimes impossible to thermally shrink the covering material to the desired extent and bond it to the periphery of the joint. Furthermore, a long time is required for completing thermal shrinkage of the covering material or bonding of the covering material to the periphery of the joint, and the operation efficiency is very low. Moreover, the heat-shrinkable material is undesirably degraded or molten because of high temperatures, before the surface of the adhesive layer of the covering material reaches the desired adhesion temperature of the adhesive (i.e., an optimum fusion temperature providing the highest adhesion strength), with the result that a covering layer having a sufficient anticorrosive effect cannot be formed on the periphery of the joint.

It now has been found that the main causes of the foregoing disadvantages are as follows. First, the conductor wire acting as a heat source is disposed in the central portion of the heat-shrinkable material with respect to the thickness direction; secondly, both the heat-shrinkable material and the heat-fusible adhesive layer are composed mainly of synthetic resin materials having a relatively low thermal conductivity; and, thirdly, since the surface of the adhesive layer of the covering material is kept in close contact with the surface of the joint of a steel pipe or the like, heat is conducted to the joint, i.e., deprived of by the joint. It is considered, accordingly, that when electricity is applied to the conductor wire, the temperature of the portion of the heat-shrinkable material adjacent to the conductor wire as the heat source is first elevated at a high temperature-rising rate, but the temperature of the adhesive layer of the covering material, which is located apart from the heat source and kept in contact with the joint, is not readily elevated and a long time is required for the temperature of the surface of the adhesive layer to reach the adhesion temperature.

For example, if a large quantity of an electric current is supplied at a high voltage to the conductor wire of the covering material arranged around the periphery of a steel pipe or the like in order to avoid the above disadvantage, the temperature of the heat-shrinkable material of the covering material is promptly elevated and thermal shrinkage of the heat-shrinkable material is completed in a very short time. However, thermal degradation or deterioration of the heat-shrinkable material commences or the heat-shrinkable material is fused or broken down before the temperature of the surface (bonding surface) of the adhesive layer of the covering material reaches the desired adhesion temperature, with the result that the anticorrosive action of the covering material is not ensured.

Furthermore, when the covering material is disposed around the periphery of the joint of a steel pipe or the like if a relatively low electric current is applied at such a low voltage so as not to cause thermal deterioration of the heat-shrinkable material, the temperature-rising rate of the heat-shrinkable material is low and uneven thermal shrinkage takes place. Furthermore, in this case, the surface of the adhesive layer does not reach the adhesion temperature of the adhesive, or a very long time is required for the surface of the adhesive layer to reach the adhesion temperature and the operation efficiency is drastically reduced.

Summary of the invention

It is, therefore, a primary object of the present invention to provide a method for forming a covering on the periphery of a joint portion of a steel pipe, a cable or the like, wherein thermal shrinkage of the covering material and bonding of the covering material to the joint portion of a steel pipe or cable can be definitely accomplished without thermal degradation, fusion or breakdown of the covering material, and the covering operation can be completed in a short time.

It is another object of the present invention to provide a method for forming a covering on the periphery of a joint portion of a steel pipe, a cable or the like, which is especially advantageously employed in a cold district.

Other objects and advantages of the present invention will be apparent from the following description.

In accordance with the present invention, there is provided a method for covering a joint portion of a pipe, a cable or the like with a covering material, which comprises

a heat-shrinkable material having a heating conductor wire embedded therein and a heat-fusible adhesive layer on the inner surface of said heat-shrinkable material, the covering material being wound to form a cylinder around the periphery of said joint portion; characterised by

supplying electricity in at least two stages of high and middle voltages to the conductor wire of the covering material through a controller capable of continuously performing the operations of (a) maintaining for a period of shorter than about 20 minutes such a high voltage $V_1$ that the electric power consumption $W_1$ per unit area of the covering material (called "power consumption rate") is 0.75 to 1.5 watt/cm², (b) changing the high voltage $V_1$ to a middle voltage $V_2$ which provides a power consumption rate $W_2$ of $(0.6 \text{ to } 0.9) \times W_1$ watt/cm² and (c) maintaining said middle voltage $V_2$ until the surface of the adhesive layer reaches an adhesion temperature of the adhesive and when interrupting the application of electricity, whereby the covering material is shrunk and bonded to the periphery of the joint portion.

Brief description of the drawings

The method of the present invention will now be described in detail with reference to the accompanying drawings, wherein:

Fig. 1 is a perspective view illustrating an example of the covering material used in the present invention;

Fig. 2 is a sectional view showing the longitudinal cross-section of the covering material shown in Fig. 1; and

Fig. 3 is a diagram illustrating one embodiment in which the covering operation is carried out according to the method of the present invention.

Description of the preferred embodiments

The covering material used in the present invention is a flat sheet-like or tubular covering material 1 comprising a heat-shrinkable material 2 formed of a thermoplastic synthetic resin, a heating conductor wire 3 (and 3′) embedded throughout the interior of the heat-shrinkable material 2 and a heat-fusible adhesive layer 4 formed on the entire inner surface (i.e., the surface to be brought into contact with the peripheral surface of a joint portion 8 of a steel pipe, a cable or the like) of the heat-shrinkable material 2. Any materials satisfying the above structural requirements can be used as the covering material in the present invention, and the shape of the covering material is not particularly critical.

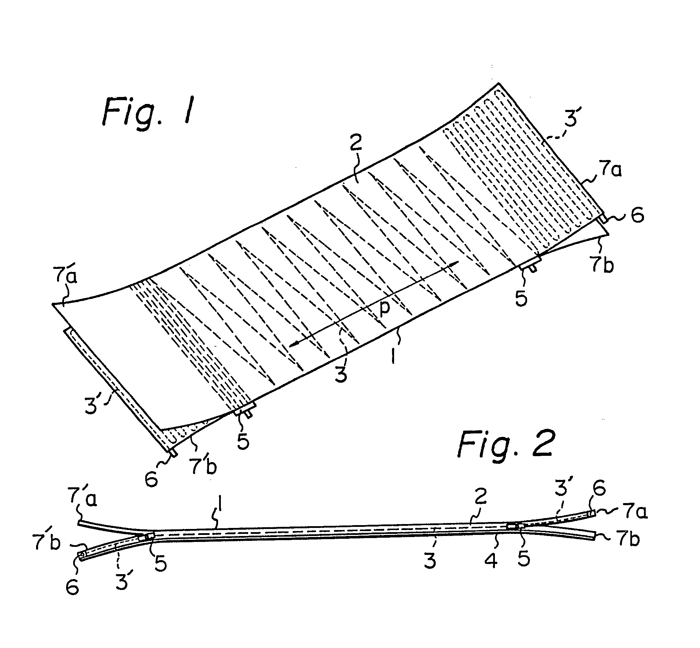

As a preferred example of the covering material, there can be mentioned a covering material 1 as shown in Figs. 1 and 2. This covering material 1 is a sheet having two branched tongue-like portions 7a and 7b and 7′a and 7′b on each of both the ends in the direction P of thermal shrinkage, in which heating conductor wires 3 and 3′ are embedded in the body portion of the sheet, in the front tongue-like portion 7a on one end of the sheet and in the back tongue-like portion 7′b on the other end of the sheet, and said heating conductor wires 3 and 3′ are arranged in a zigzag manner, as shown in the drawings, so that thermal shrinkage of the entire sheet is permitted, and a heat-fusible adhesive layer 4 is formed on the entire inner surface of the sheet.

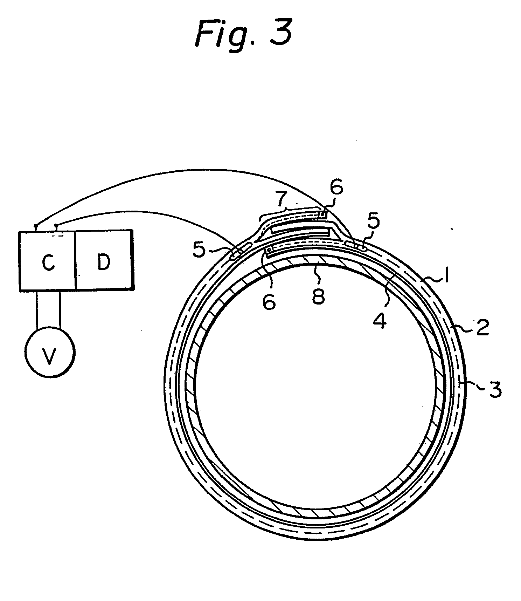

The tongue-like portions 7a and 7b and 7′a and 7′b are formed in order to bond both the end portions of the covering material 1 to form a cylinder of the covering material 1. Namely, as shown in Fig. 3, these tongue-like portions are engaged with each other and bonded together.

Furthermore, in the present invention, there can be used a covering material having an entirely flat sheet-like form free of tongue-like portions, which tongue-like portions are shown in Figs. 1 and 2, on both the ends, in which an adhesive layer is formed on the front side of one end of the flat sheet and on the back side of the other end of the flat sheet, so that both the ends of the sheet can be strongly bonded to each other. There can also be used a double-tubular covering material comprising an outer tubular layer of a heat-shrinkable material, including a heating conductor wire therein, and an inner tubular layer of a heat-fusible adhesive formed on the inner surface of the heat-shrinkable material layer.

The heat-shrinkable material of the covering material may be a heat-shrinkable film or sheet prepared by extruding, in the form of a film or sheet, a thermoplastic synthetic resin such as polyethylene, an ethylene/vinyl acetate copolymer polypropylene, polyvinyl chloride or polyamide; drawing the film or sheet at a high temperature; cooling the film or sheet in the stretched state to render the film or sheet heat-shrinkable; and, if necessary to improve the heat resistance or thermal shrinkability, irradiating the film or sheet with radial rays, such as electron beams, to cross-link the film or sheet to such an extent that the degree of gel fraction is in the range of from 20 to 70%, preferably 30 to 60%.

As the heating conductor wire to be embedded in the covering material, there can be used metal wires composed mainly of metals, such as copper, copper alloys, nickel alloys and chromium alloys, and carbon wires.

The kind of the conductor wire is not particularly critical, as long as it generates heat under application of electricity and has good flexibility and softness. From the viewpoint of the flexibility and softness and the heat-generating property, it is preferred that a copper wire having a diameter of about 0.01 to about 1.0 mm be used as the conductor wire.

In the present invention, it is preferred that the heating conductor wire is embedded and arranged in the covering material so that the electric power consumption per unit area of the covering material (i.e., power consumption rate) is in the range of from 0.4 to 2 watt/cm², more preferably, from 0.45 to 1.8 watt/cm², under a voltage of about 50 to about 500 volts.

A pair of terminals 5 for connection to a power source or controller are preferably provided on the end portions of the conductor wire of the covering material.

In the case where the covering material 1 has a pair of tongue-like portions on each of both the ends, as shown in Figs. 1 and 2, it is preferred that the heating conductor wire 3 embedded in the body portion and the heating conductor wire 3′ embedded in the tongue-like portions 7a and 7′b should form different circuits and that one end of the conductor wire 3′ in the tongue-like portion be connected to the terminal 5 of the conductor wire 3 in the body portion and a terminal 6 is provided on the other end of the conductor wire 3′.

The adhesive constituting the heat-fusible adhesive layer of the covering material may be any adhesive which is composed mainly of a thermoplastic synthetic resin which is neither softened nor becomes stickly at a temperature of not higher than about 50°C, especially not higher than about 40°C, and of which an adhesion temperature providing a maximum adhesion strength when cooled to normal temperatures is in the range of from about 80 to about 150°C. The kind and composition of the adhesive are not particularly critical, as long as the above requirements are satisfied.

It is preferred that the entire thickness of the covering material be 1 to 6 mm, more preferably about 1.2 to about 5 mm, and the degree of thermal shrinkage of the entire covering material be 20 to 80%, more preferably about 30 to about 60%.

According to the covering method of the present invention, at the first step, the above-mentioned covering material is disposed so that its winds in the form of a cylinder around a joint portion 8 of a steel pipe or cable, as shown in Fig. 3, and at the second step, electricity is supplied in at least two stages at high and middle voltages to the conductor wire 3 of the covering material 1 through a specific controller C capable of continuously performing the operations of (a) maintaining a specific high voltage $V_1$ for a period of shorter than about 20 minutes, preferably for a period of 1 to 15 minutes, (b) changing the high voltage $V_1$ to a

specific middle voltage $V_2$ and (c) maintaining the middle voltage $V_2$ for a specific time and then interrupting the application of electricity, whereby the covering material 1 is thermally shrunk and bonded to the joint portion 8 of the steel pipe or the like.

The above-mentioned controller C is a kind of a transformer capable of continuously performing, especially automatically, operations of (a) maintaining for a period of shorter than about 20 minutes, preferably for about 1 to about 15 minutes, such a high voltage $V_1$ that the power consumption rate $W_1$ of the covering material is 0.75 to 1.5 watt/cm², preferably 0.8 to 1.4 watt/cm², (b) changing the high voltage $V_1$ to a middle voltage $V_2$ which provides a power consumption rate $W_2$ of $(0.6$ to $0.9) \times W_1$ watt/cm², preferably $(0.7$ to $0.85) \times W_1$ watt/cm², in the covering material, and (c) maintaining said middle voltage $V_2$ until the surface of the adhesive layer of the covering material reaches an adhesion temperature of the adhesive and then interrupting the application of electricity.

In the present invention, it is preferred that the controller C be capable of maintaining an initial voltage $V_0$ providing a power consumption rate of $(0.4$ to $0.6) \times W_1$ watt/cm² in the covering material for about 0.5 to about 10 minutes, especially about 1 to about 6 minutes, for preheating the covering material before of the high voltage $V_1$ is applied; and also of changing this initial voltage $V_0$ to the high voltage $V_1$.

The specific times for maintaining the above-mentioned voltages can be determined appropriately depending on the thickness of the covering material, the thickness of the steel pipe, the ambient temperature and other factors. If the controller C is connected to a computer D capable of calculating and indicating the respective times when such data are put in the computer D, the above-mentioned voltages and the times for maintaining of these voltages, can automatically be changed and the operation efficiency can be remarkably increased.

Furthermore, there may be adopted a controller C which detects the surface temperature of the heat-fusible adhesive layer 4 of the covering material 1 and emits an instruction to stop the application of electricity when the temperature reaches the adhesion temperature.

In the present invention, it is preferred that each of the above-mentioned voltages be in the range of from 10 to 500 volts, more preferably from 30 to 400 volts.

In the present invention, the application of electricity under a high voltage to the conductor wire of the covering material for a long time is not preferred, because the covering material becomes thermally deteriorated or thermally fused or broken. Furthermore, the application of electricity under a low voltage is not preferred, because a long time is then required for completion of thermal shrinkage of the covering material and completion of the bonding operation.

One embodiment of the covering method of the present invention, in which the covering material 1 is used, will now be described.

At first, the covering material 1 is arranged so that it is wound to form a cylinder around the joint portion 8 of the steel pipe in the state where the tongue-like portions 7 and 7' on both the ends of the covering material 1 are engaged with each other, as shown in Fig. 3. Then, the controller C connected to a power source V is connected to the terminal 5 of the heating conductor wire 3 of the covering material 1 and the terminals 6 of the tongue-like portions are connected to each other through a switch, and application of electricity is commenced.

The controller C used comprises a computer D capable of enabling the controller C to automatically supply voltages $V_0$, $V_1$ and $V_2$ providing power consumption rates of $W_0$, $W_1$ and $W_2$, respectively, in the covering material. Various data are put into this computer D.

When the application of electricity from the power source V through the controller C is commenced in the above-mentioned state, the initial voltage $V_0$ is first maintained for about 1 to about 10 minutes, so that the power consumption rate $W_0$ of the covering material is (0.04 to 0.6)×$W_1$ watt/cm², whereby the covering material is preheated and bonding of the tongue-like portion 7 is partially completed.

Then, the application of electricity is carried out for a period of shorter than about 20 minutes, preferably for a period of shorter than 15 minutes, more preferably for 1 to 10 minutes, under such a high voltage $V_1$ that a power consumption rate $W_1$ of 0.75 to 1.5 watt/cm² is provided in the covering material, whereby the tongue-like portion 7 is completely bonded and the entire covering material is thermally shrunk and brought into close contact with the peripheral surface of the joint portion 8 of the steel pipe.

Then, the application of elecrticity is continuted under such a voltage $V_2$ that a power consumption rate $W_2$ of (0.6 to 0.9)×$W_1$ watt/cm² is provided, whereby the surface of the adhesive layer 4 of the covering material reaches the adhesion temperature of the adhesive, and, when bonding of the covering material to the peripheral surface of the joint portion 8 of the steel pipe is completed, the application of electricity is interrupted. Thus, covering of the peripheral surface of the joint portion 8 of the steel pipe is completed.

Incidentally, the application of electricity to the conductor wire 3' of the tongue-like portion 7 may be stopped midway during the application of electricity to the conductor wire 3 of the body portion, by means of the switch (not shown) connecting both terminals 6 of the tongue-like portions 7a and 7b to each other, whereby over-heating of the tongue-like portion 7 is prevented.

According to the covering method of the present invention, the covering operation can be completed in a short time, and, furthermore, thermal shrinkage of the covering material and bonding of the covering material to the joint portion of a steel pipe or cable can be definitely accomplished without thermal degradation, fusion or breakdown of the covering material. Therefore, the covering method of the present invention is industrially advantageous and excellent, especially in the case where the covering operation is carried out in a cold district.

**Claims**

1. A method for covering a joint portion (8) of a pipe or a cable with a covering material (1), which comprises a heat-shrinkable material (2) having a heating conductor wire (3) embedded therein and a heat-fusible adhesive layer (4) on the inner surface of said heat-shrinkable material, the covering material being wound to form a cylinder around the periphery of said joint portion characterised by supplying electricity in at least two stages of high and middle voltages to the conductor wire (3) of the covering material (1) through a controller (C) capable of continuously performing the operations of (a) maintaining for a period of shorter than about 20 minutes such a high voltage $V_1$ that the electric power consumption $W_1$ per unit area of the covering material is in the range of from 0.75 to 1.5 watt/cm², (b) changing the high voltage $V_1$ to a middle voltage $V_2$ which provides an electric power consumption $W_2$, per unit area of the covering material, of (0.6 to 0.9)×$W_1$ watt/cm² and (c) maintaining said middle voltage $V_2$ until the surface of the adhesive layer (4) reaches an adhesion temperature of the adhesive and then interrupting the application of electricity, whereby the covering material (1) is shrunk and bonded to the periphery of the joint portion (8).

2. A method according to claim 1 wherein the heating conductor wire (3) is embedded and arranged in the covering material so that the electrical power consumption per unit area of the covering material is in the range of form 0.4 to 2 watt/cm² under a voltage of about 50 to about 500 volts.

3. A method according to claim 2 wherein the electrical power consumption per unit area of the covering material is in the range of from 0.45 to 1.8 watt/cm² under a voltage of about 50 to about 500 volts.

4. A method according to claim 1 wherein the high voltage $V_1$ is maintained for about 1 to 15 minutes.

5. A method according to claim 1 or 4 wherein the high voltage $V_1$ is such that the electric power consumption $W_1$ per unit area of the covering material is in the range of from 0.8 to 1.4 watt/cm².

6. A method according to claim 1 wherein the middle voltage $V_2$ is such that an electric power consumption $W_2$, per unit area of the covering material, of $(0.7$ to $0.85) \times W_1$ watt/cm² is provided.

7. A method according to claim 1 wherein, prior to the maintainance of the high voltage $V_1$, an initial voltage $V_0$ such that the electric power consumption $W_0$ per unit are of the covering material is $(0.4$ to $0.6) \times W_1$ watt/cm² is maintained for about 0.5 to 10 minutes to preheat the covering material.

8. A method according to claim 1 wherein said covering material comprises a heatshrinkable material in the form of a sheet having two branched tongue-like portions (7a, 7b, 7'a, 7'b) on each of both the ends of the direction of thermal shrinkage, and the heating conductor wire (33') is embedded in the body portion of said sheet, in the front tongue-like portion on one end of said sheet and in the back tongue-like portion on the other end of the sheet in a zigzag manner such that thermal shrinkage of the entire sheet is permitted.

9. A method according to claim 8 wherein the heating conductor wire (3) in the body portion of the sheet is independent from the heating conductor wires (3') in the branched tongue-like portions, so that the application of electricity and interruption of the application of electricity to the heating conductor wires in the branched tongue-like portions can be carried out independently from the heating conductor wire in the body portion.

10. A method according to claim 1 or 8 wherein the covering material has a thickness of from 1 to 6 mm and a degree of thermal shrinkage of from 20 to 80%.

11. A method according to claim 1 or 8 wherein the heat shrinkable material is a thermoplastic synthetic resin cross-linked to such an extent that the degree of gel fraction is in the range of from 20 to 70%.

## Patentansprüche

1. Verfahren zum Umhüllen einer Verbindungsstelle (8) eines Rohres oder eines Kabels mit einem Umhüllungsmaterial (1), welches ein warm aufschrumpfbares Material (2) mit einem darin eingebetteten Heizleiterdraht (3) und mit einer durch Wärme schmelzbaren Klebstoffschicht (4) an der inneren Oberfläche des warm aufschrumpfbaren Materials aufweist, wobei das Umhüllungsmaterial zur Bildung eines den Umfang der Verbindungsstelle umgebenden Zylinders gewickelt ist, dadurch gekennzeichnet, daß dem Leiterdraht (3) des Umhüllungsmaterials (1) elektrische Energie in mindestens zwei Stufen hoher und mittlerer Spannung durch eine Steuerung (C) zugeführt wird, die geeignet ist, kontinuierlich (a) während eines Zeitraums von weniger als ungefähr 20 Minuten eine solche hohe Spannung $V_1$ aufrechtzuerhalten, daß der elektrische Lesitungsverbrauch $W_1$ pro Flächeneinheit des Umhüllungsmaterials im Bereich von 0.75 bis 1,5 Watt/cm² liegt, (b) die hohe Spannung $V_1$ zu einer mittleren Spannung $V_2$ zu verändern, welche einen elektrischen Leistungsverbrauch $W_2$ pro Flächeneinheit des Umhüllungsmaterials von 0,6 bis $0,9 \times W_1$ Watt/cm² ergibt, und (c) die mittlere Spannung $V_2$ aufrechtzuerhalten, bis die Oberfläche der Klebstoffschicht (4) eine Adhäsionstemperatur des Klebstoffs erreicht, und dann die elektrische Energiezufuhr zu unterbrechen, wodurch das Umhüllungsmaterial (1) zum Schrumpfen gebracht und mit dem Umfang der Verbindungsstelle (8) verbunden wird.

2. Verfahren nach Anspruch 1, bei dem der Heizleiterdraht (3) in dem Umhüllungsmaterial so eingebettet und angeordnet ist, daß der elektrische Leistungsverbrauch pro Flächeneinheit des Umhüllungsmaterials bei einer Spannung von etwa 50 bis etwa 500 Volt in dem Bereich von 0,4 bis 2 Watt/cm² liegt.

3. Verfahren nach Anspruch 2, bei dem der elektrische Leistungsverbrauch pro Flächeneinheit des Umhüllungsmaterials bei einer Spannung von ungefähr 50 bis ungefährt 500 Volt in dem Bereich von 0,45 bis 1,8 Watt/cm² liegt.

4. Verfahren nach Anspruch 1, bei dem die hohe Spannung $V_1$ für etwa 1 bis 15 Minuten aufrechterhalten wird.

5. Verfahren nach Anspruch 1 oder 4, bei dem die hohe Spannung $V_1$ so ist, daß der elektrische Leistungsverbrauch $W_1$ pro Flächeneinheit des Umhüllungsmaterials in dem Bereich von 0,8 bis 1,4 Watt/cm² liegt.

6. Verfahren nach Anspruch 1, bei dem die mittlere Spannung $V_2$ so ist, daß sich ein elektrischer leistungsverbrauch $W_2$ pro Flächeneinheit des Umhüllungsmaterials von 0,7 bis $0,85 \times W_1$ Watt/cm² ergibt.

7. Verfahren nach Anspruch 1, bei dem vor dem Aufrechterhalten der hohen Spannung $V_1$ eine Anfangsspannung $V_0$, bei der der elektrische Leistungsverbrauch $W_0$ pro Flächeneinheit des Umhüllungsmaterials 0,4 bis $0,6 \times W_1$ Watt/cm² beträgt, für ungefähr 0,5 bis 10 Minuten aufrechterhalten wird, um das Umhüllungsmaterial vorzuheizen.

8. Verfahren nach Anspruch 1, bei dem das Umhüllungsmaterial ein warm aufschrumpfbares Material in Form eines Blattes aufweist, das an jedem der beiden in der Richtung des thermischen Schrumpfens gelegenen Enden zwei gegabelte, zungenartige Abschnitte (7a, 7b, 7'a, 7'b) hat, und der Heizleiterdraht (3, 3') im Körperteil des Blattes, in dem vorderen zungenartigen Abschnitt an einem Ende des Blattes und in dem hinteren zungenartigen Abschnitt an anderen Ende des Blattes in Zickzackanordnung eingebettet ist, so daß ein thermisches Schrumpfen des gesamten Blattes stattfinden kann.

9. Verfahren nach Anspruch 8, bei dem der Heizleiterdraht (3) in dem Körperteil des Blattes von den Heizleiterdrähten (3') in den gegabelten, zungenartigen Abschnitten unabhängig ist, so daß die Zufuhr elektrischer Energie und die Unterbrechung der Zufuhr der elektrischen Energie zu den Heizleiterdrähten in den gegabelten, zungenartigen Abschnitten unabhängig von dem Heizleiterdraht in dem Körperteil durch geführt werden kann.

10. Verfahren nach Anspruch 1 oder 8, bei dem das Umhüllungsmaterial eine Stärke von 1 bis 6 mm und einen thermischen Schrumpfungsgrad von 20 bis 80% besitzt.

11. Verfahren nach Anspruch 1 oder 8, bei dem das warm aufschrumpbare Material ein thermoplastisches Kunstharz ist, das in einem solchen Ausmaß quervernetzt ist, daß der Grad der Gelfraktion im Beriech von 20 bis 70% liegt.

## Revendications

1. Procédé pour revêtir une portion joint (8) d'un tube ou câble avec une matière de revêtement (1) qui comprend une matière thermorétractable (2) ayant un fil conducteur chauffant (3) noyé dans sa masse, et une couche adhésive thermofusible (4) sur la surface intérieure de ladite matière thermorétractable, la matière de revêtement étant enroulée pour former un cylindere autour de la périphérie de ladite portion joint, et caractérisé en ce qu'on fournit de l'électricité en au moins deux étapes de tensions haute et moyenne au fil conductuer (3) de la matière de revêtement (1) par l'intermédiaire d'un appareil de commande (C) capable d'effecteur de façn continue les opérations consistant à (a) maintenir pendant une période de moins d'environ 20 minutes une tension $V_1$ suffisamment haute pour que la consommation de puissance électrique $W_1$ par surface unitaire de la matière de revêtement soit dans l'intervalle de 0,75 à 1,5 watts/cm², (b) passer de la haute tension $V_1$ à une moyenne tension $V_2$ qui donne une consommation de puissance électrique $W_2$ par surface unitaire de la maître de revêtement, de (0,6 à 0,9)×$W_1$ watts/cm² et (c) maintenir ladite moyenne tension $V_2$ jusqu'à ce que la surface de la couche adhésive (4) atteigne une température d'adhésion de l'adhésif puis interrompre l'application de l'électricité, de sorte que la matière de revêtement (1) est contractée et collée à la périphérie de la portion joint (8).

2. Un procédé selon la revendication 1, dans lequel le fil conducteur chauffant (3) est noyé et agencé dans la matière de revêtement de telle manière que la consommation de puissance électrique par surface unitaire de la matière de revêtement soit dans l'intervals de 0,4 à 2 watts/cm² sous une tension d'environ 50 à environ 500 volts.

3. Un procédé selon la revendication 2, dans lequel la consommation de puissance électrique par surface unitaire de la matière de revêtement est dans l'intervalle allant de 0,45 à 1,8 watts/cm² sous une tension d'environ 50 à envirion 500 volts.

4. Un procédé selon la revendication 1, dans lequel la haute tension $V_1$ est maintenue pendant environ 1 à 15 minutes.

5. Un procédé selon la revendication 1 ou 4, dans lequel la haute tension $V_1$ est telle que la consommation de puissance électrique $W_1$ par surface unitaire de la matière de revêtement soit dans l'intervalle allant de 0,8 à 1,4 watts/cm².

6. Un procédé selon la revendication 1, dans lequel la moyenne tension $V_2$ est telle qu'on obtienne une consommation de puissance électrique $W_2$, par surface unitaire de la matière de revêtement, de (0,7 à 0,85)×$W_1$ watts/cm².

7. Un procédé selon la revendication 1, dans lequel, avant de maintenir la haute tension $V_1$, on maintient une tension initiale $V_0$ telle que la consommation de puissance électrique $W_0$ par surface unitaire de la matière de revêtement soit (0,4 à 0,6)×$W_1$ watts/cm², pendant environ 0,5 à 10 minutes, pour préchauffer la matière de revêtement.

8. Un procédé selon la revendication 1, dans lequel ladite matière de revêtement comprend une matière thermorétractable sous la forme d'une feuille ayant deux portions ramifiées en forme de languettes (7a, 7b, 7'a, 7'b) sur chacune des deux extrémités, dans la direction de la contraction thermique, et le fil conducteur chauffant (3, 3') est noyé dans la portion corps de ladite feuills, dans la portion avant en forme de languette sur une extrémité de ladite feuille et dans la portion arrière en forme de languette sur l'autre extrémité de ladite feuille, en zigzag, de manière à permettre la contraction thermique de l'ensemble de la feuille.

9. Un procédé selon la revendication 8, dans lequel le fil conducteur chauffant (3) contenu dans la portion corps de la feuille est inépendant des fils conducteurs chauffants (3') contenus dans les portions ramifiées en forme de languettes, de sorte que l'application de l'électricité et l'interruption de l'application de electricite aux fils conducteurs chauffants dans les portions en forme de languettes ramifiées puissant s'effectuer indépendamment du fil conducteur chauffant compris dans la portion corps.

10. Un procédé selon la revendication 1 ou 8, dans lequel la matière de revêtement possède une épaisseur de 1 à 6 mm et un degré de contraction thermique de 20 à 80%.

11. Un procédé selon la revendication 1 ou 8, dans lequel la maître thermorétractable est une résine synthétique thermoplastique réticulée dans une mesure telle que le degré de la fraction gel soit dans l'intervalle allant de 20 à 70%.

*Fig. 1*

*Fig. 2*

1

# Fig. 3